# EUROPEAN PATENT SPECIFICATION

(11) **EP 2 899 396 B1**
(45) Date of publication and mention of the grant of the patent: **16.08.2017**
(21) Application number: 12885167.2
(22) Date of filing: 24.09.2012
(51) Int. Cl.: B29B 11/16, B29C 70/06, B29C 70/50, B29C 70/20, B29C 70/16

(54) **METHOD FOR MANUFACTURING WINDMILL BLADE**
VERFAHREN ZUR HERSTELLUNG EINES WINDRADFLÜGELS
PROCÉDÉ DE FABRICATION DE PALE D'ÉOLIENNE

(43) Date of publication of application: 29.07.2015
(73) Proprietor: Mitsubishi Heavy Industries, Ltd., Tokyo 108-8215 (JP); Euros Entwicklungsgesellschaft für Windkraftanlagen mbH, 13088 Berlin (DE)
(72) Inventor: KIMURA, Yasutaka, Tokyo 108-8215 (JP); SHINDO, Kentaro, Tokyo 108-8215 (JP); NOWAK, Dennis, 13088 Berlin (DE)
(74) Representative: Intès, Didier Gérard André
(86) International application number: PCT/JP2012/074351
(87) International publication number: WO 2014/045429

(56) References cited:
- EP-B1- 1 027 206
- JP-A- H0 899 365
- JP-A- H0 899 365
- JP-A- S52 151 362
- JP-A- S62 135 537
- JP-A- 2002 212 886
- JP-A- 2002 363 855
- JP-A- 2006 232 915
- JP-A- 2008 290 331
- JP-A- 2012 016 948
- JP-A- 2012 086 564
- JP-A- 2012 153 839
- JP-A- 2012 153 839
- US-A- 4 532 169
- US-A- 6 094 791
- US-A1- 2008 181 781
- US-A1- 2011 086 199
- US-A1- 2012 009 069
- US-B1- 6 585 842

## Description

### [Technical Field]

The present invention relates to a method for manufacturing a wind turbine blade at least partially formed of fiber-reinforced plastic.

### BACKGROUND ART

Fiber-reinforced plastic has been used as a material of the wind turbine blade. As a typical manufacturing method of the wind turbine blade using the fiber-reinforced plastic, there is a known method of molding a wind turbine blade by impregnating the fiber fabric sheet stacked on a mold with resin and thermally curing the resin to mold the wind turbine blade. Another method is stacking, on the mold, prepreg whose resin impregnated in the fiber fabric sheet is semi-cured in advance to B-stage and then thermally curing the resin of the prepreg to mold the wind turbine blade.

According to this method, with use of the fiber fabric, there is uneven distribution of the fiber and resin in final main component parts of the wind turbine blade. This leads to formation of resin rich "pockets" having excess resin in some areas of the wind turbine blade. The resin pocket leads to strength decrease of the wind turbine blade and it is desired to develop a method for manufacturing a wind turbine blade with less possibility of formation of the resin pocket.

Described in Patent Literature 1 is a method for manufacturing a wind turbine blade without using the fiber fabric, by drawing bundles of glass fiber roving from bobbins, impregnating the bundles of glass fiber roving with resin and stacking it on the mold (see FIG.1 of Patent Literature 1).

[PTL 1]
US 2012/0009069 A

JP 2012 153839, which discloses preamble of claim 1, discloses a molded article for flying object or windmill.

US 6 585 842 discloses a method and a machine for producing multiaxial fibrous webs.

### SUMMARY

### [Technical Problem]

In the method described in Patent Literature 1, a number of roving bundles are stacked on the mold to obtain the component of the wind turbine blade. The stacking operation requires enormous time and effort. Further, if there is twisting or waving of the roving bundles during the stacking operation, this can lead to defect of the component of the wind turbine blade.

It is an object of at least one embodiment of the present invention to provide a method for manufacturing a wind turbine, by which a wind turbine blade at least partially formed of fiber-reinforced plastic, is efficiently produced.

### [Solution to Problem]

According to at least one embodiment of the present invention, a method for manufacturing a wind turbine blade which is at least partially formed of fiber-reinforced plastic is defined by claim 1 and comprises:
a fiber drawing step of drawing a plurality of fiber bundles each made of reinforcement fiber from a plurality of bobbins, respectively;
a reinforcement fiber sheet formation step of arranging the plurality of fiber bundles drawn from the bobbins next to one another and opening the plurality of fiber bundles so as to overlap adjacent two of the fiber bundles and form a reinforcement fiber sheet from the plurality of fiber bundles,
a resin-impregnated fiber sheet formation step of impregnating the reinforcement fiber sheet with a thermohardening resin which is solventless and in a liquid form so as to form a resin-impregnated fiber sheet including the reinforcement fiber and the uncured thermohardening resin; and
a molding step of arranging on a mold the resin-impregnated fiber sheet in such a state that the thermohardening resin is uncured and then thermally curing the thermohardening resin of the resin-impregnated fiber sheet on the mold so as to mold the wind turbine blade.

According to the above method for manufacturing the wind turbine blade, the reinforcement fiber sheet obtained from the plurality of fiber bundles having been drawn from the bobbins is impregnated with the thermohardening resin to form the resin-impregnated fiber sheet and the resin-impregnated fiber sheet is used to mold the wind turbine blade. Thus it is possible to reduce time and labor for performing the stacking operation compared to the case where roving bundles are stacked onto the mold. Further, there is fundamentally no need to take possible causes of the component defects in the wind turbine blade into consideration, such as twisting and waving in the roving bundles.

The thermohardening resin is in a liquid form, hence having superior impregnating ability with respect to the reinforcement fiber sheet. Further, the thermohardening resin is solventless and hence a solvent-volatilizing step can be removed. Furthermore, the resin-impregnated fiber sheet including the uncured thermohardening resin is placed onto the mold to mold the wind turbine blade and thus the liquidity of the thermohardening resin during the molding is superior. Therefore, it is possible to obtain high-quality wind turbine blade.

According to the present invention, in the reinforcement fiber sheet formation step, the plurality of fiber bundles being transferred continuously are opened between an upstream nip part and a downstream nip part each including a pair of rollers in such a state that the plurality of fiber bundles are nipped between the pair of rollers of each of the upstream nip part and the downstream nip part, and the pair of rollers of the upstream nip part rotates at the same circumferential speed as the pair of rollers of the downstream nip part.

By rotating the pair of rollers of the upstream nip part at the same circumferential speed as the pair of rollers of the downstream nip part, practically no tension is placed on the plurality of fiber bundles being transferred continuously between the upstream nip part and the downstream nip part. This makes it possible to open the fiber bundles effectively. Therefore, it is possible to obtain the reinforcement fiber sheet with uniform thickness, resulting in improved product quality of the wind turbine blade.

According to some embodiments, in the reinforcement fiber sheet formation step, the fiber bundles are opened by compressed gas discharged from at least one nozzle while moving the at least one nozzle back and forth in a width direction of the reinforcement fiber sheet, the at least one nozzle being placed between the upstream nip part and the downstream nip part to oppose the plurality of fiber bundles.

Once the compressed gas is discharged from the nozzle, fibers belonging to each fiber bundle move toward adjacent fiber bundle and the boundaries between the adjacent fiber bundles become obscured. More specifically, each of the fiber bundles is dispersed by the compressed gas and the fibers are rearranged between the adjacent two of the fiber bundles, thereby making it no longer possible to define the boundary between the adjacent two of the fiber bundles. In this manner, the opening of the fiber bundles is efficiently performed.

Meanwhile, in such a case that the circumferential speed of the rollers of the upstream nip part is the same as the circumferential speed of the rollers of the downstream nip part, the compressed gas is discharged at the fiber bundles from the nozzle in such a state that practically no tension is placed on the fiber bundles. Thus, the fiber bundles can be opened more effectively.

According to some embodiments, in the reinforcement fiber sheet formation step, at least one of the rollers of the downstream nip part is vibrated so as to open the fiber bundles.

Upon vibrating at least one of the rollers of the downstream nip part, the fiber bundles are dispersed so as to rearrange the fibers between the adjacent two of the fiber bundles. In this manner, the fiber bundles are opened effectively. In this operation, by rotating the rollers of the upstream nip part at the same circumferential speed as the rollers of the downstream nip part, the fiber bundles contact the rollers while being subjected to practically no tension. Thus, the fiber bundles can be opened more effectively.

According to an embodiment, in the reinforcement fiber sheet formation step, the at least one of the rollers is vibrated in a width direction of the reinforcement fiber sheet.

By vibrating at least one of the rollers in the width direction of the reinforcement fiber sheet, rearrangement of the fibers between the adjacent fiber bundles is promoted. Thus, the fiber bundles can be opened more effectively.

According to some embodiments, in the resin-impregnated fiber sheet formation step, after impregnating the reinforcement fiber sheet with the uncured thermohardening resin, the resin-impregnated fiber sheet is nipped between a pair of rollers to adjust an amount of the uncured thermohardening resin contained in the resin-impregnated fiber sheet.

As a result, a content ratio of the thermohardening resin to the reinforcement fiber in the resin-impregnated fiber sheet can be appropriately adjusted. This leads to improvement of the strength of the wind turbine blade.

According to some embodiments, the above method for manufacturing the wind turbine blade further comprises:
a roll formation step of winding the resin-impregnated fiber sheet around a bobbin so as to form at least one roll of the resin-impregnated fiber sheet, and
in the molding step, the resin-impregnated fiber sheets are drawn from the at least one roll and stacked onto the mold.

In a production process of a wind turbine blade where the operation for forming the resin-impregnated fiber sheet and the operation for molding the wind turbine blade are performed in a sequential manner, the operation for forming the resin-impregnated fiber sheet and the operation for stacking the resin-impregnated fiber sheet on the mold are performed as one work unit and the work unit is repeated. Thus it is difficult to shorten a lead time.

In contrast, according to the above method where the resin-impregnated fiber sheet is winded around the bobbin once to form the roll of the resin-impregnated fiber sheet, the step of forming the roll of the resin-impregnated fiber sheet and the step of molding the wind turbine blade can be separated. Thus from a perspective of improving productivity of the wind turbine blade in the production process, resource (manpower, equipments and the like) inputted to each step can be distributed appropriately. As a result, the wind turbine blade can be manufactured efficiently

According to an embodiment, in the molding step, in such a state that one end of the resin-impregnated fiber sheet of the at least one roll is secured by a clamp, a cart installed with the at least one roll is moved away from the clamp in a longitudinal direction of the mold and the resin-impregnated fiber sheet having been drawn from the at least one roll is pressed onto the mold by at least one roller attached to the cart.

As a result, the molding step can be automated, hence improving the production efficiency of the wind turbine blade. Further, by using more than one cart, it is possible to decrease a cycle time of the molding step (the step for stacking the resin-impregnated fiber sheets onto the mold M) and also to improve the production efficiency of the wind turbine blade.

According to some embodiments, the above method for manufacturing the wind turbine blade, further comprises
a roll formation step of winding the reinforcement fiber sheet around a bobbin so as to form at least one roll of the reinforcement fiber sheet, and
in the resin-impregnated fiber sheet formation step, in such a state that one end of the reinforcement fiber sheet of the at least one roll is secured by a clamp, a cart installed with the at least one roll of the reinforcement fiber sheet is moved away from the clamp in a longitudinal direction of the mold to draw the reinforcement fiber sheet from the at least one roll, and the reinforcement fiber sheet is impregnated with the uncured thermohardening resin by an impregnation unit provided in the cart so as to form the resin-impregnated fiber sheet, and
in the molding step, the resin-impregnated fiber sheet transferred from the impregnation unit is pressed onto the mold by at least one roller attached to the cart.

By winding the reinforcement fiber sheet around the bobbin once to form the roll of the reinforcement fiber sheet, the step of forming the roll of the reinforcement fiber sheet and the step of molding the wind turbine blade can be separated. Thus from a perspective of improving productivity of the wind turbine blade in the production process, resource (manpower, equipments and the like) inputted to each step can be distributed appropriately. As a result, the wind turbine blade can be manufactured efficiently.

Further, the step of forming the roll of the reinforcement fiber sheet and the operation of molding the wind turbine blade can be automated. Further, by using more than one cart, it is possible to decrease a cycle time of the resin-impregnated fiber sheet formation step and the molding step and also to improve the production efficiency of the wind turbine blade. Further, the roll of the reinforcement fiber sheet can be stored for long periods even at ordinary temperatures. This eliminates the need for refrigeration or the like for preserving the roll for long periods, resulting in cost reduction.

According to some embodiments, in the resin-impregnated fiber sheet formation step, the thermohardening resin is injected to an interior space of a core of a bobbin around which the reinforcement fiber sheet composed of the reinforcement fiber is winded to form a roll of the reinforcement fiber sheet, and the reinforcement fiber sheet is impregnated with the thermohardening resin having passed through an opening formed in the core of the bobbin.

As a result, it is possible to perform the impregnation of the reinforcement fiber sheet with the thermohardening resin in a prompt manner. Further, the roll of the reinforcement fiber sheet before being impregnated with the thermohardening resin can be stored for long periods even at ordinary temperatures. This eliminates the need for refrigeration or the like for preserving the roll for long periods, resulting in cost reduction.

According to some embodiments, in the molding step, the resin-impregnated fiber sheet is arranged on the mold between a pair of core members of the wind turbine blade arranged in a longitudinal direction of the mold, and the thermohardening resin of the resin-impregnated fiber sheet is thermally cured on the mold so as to form a spar cap of the wind turbine blade between the pair of core members.

As a result, the spar cap made of high-quality fiber-reinforced plastic can be manufactured efficiently.

Further, according to some embodiments, the fiber-reinforced plastic is CFRP including carbon fiber as the reinforcement fiber.

### [Advantageous Effects]

According to at least one embodiment the resin-impregnated fiber sheet formed by impregnating the fiber sheet with the thermohardening resin is used to mold the wind turbine blade. Thus it is possible to reduce time and labor for performing the stacking step compared to the case where roving bundles are stacked onto the mold. Further, there is fundamentally no need to take into consideration possible causes of the component defects in the wind turbine blade, such as twisting and waving in the roving bundles. Moreover, the thermohardening resin is in a liquid form, hence having superior impregnating ability with respect to the reinforcement fiber sheet. Further, the thermohardening resin is solventless and hence a solvent-volatilizing step can be removed. Furthermore, the resin-impregnated fiber sheet including the uncured thermohardening resin is placed onto the mold to mold the wind turbine blade and thus the liquidity of the thermohardening resin during the molding is superior. Therefore, it is possible to obtain high-quality wind turbine blade.

### BRIEF DESCRIPTION OF DRAWINGS

[FIG.1] FIG.1 is a flow chart illustrating a flow of a method for manufacturing a wind turbine blade according to an embodiment.
[FIG.2] FIG.2 is a cross-sectional view of a wind turbine blade according to an embodiment.
[FIG.3] FIG.3 is a perspective illustration of a roll formation unit for forming a roll of a resin impregnated fiber sheet according to an embodiment.
[FIG.4] FIG.4 is an illustration of a fiber opening operation by a compressed-gas discharge unit according to an embodiment.
[FIG.5A] FIG.5A is a plane view of a stacking unit for stacking the resin-impregnated fiber sheet on a mold according to an embodiment.
[FIG.5B] FIG.5B is a side view of the stacking unit for stacking the resin-impregnated fiber sheet on the mold according to the embodiment.
[FIG.6] FIG.6 is a cross-sectional illustration of an operation of stacking the resin-impregnated fiber sheet on the mold according to an embodiment.
[FIG.7] FIG.7 is an illustration of an operation of stacking the resin-impregnated fiber sheet using a plurality of the stacking units.
[FIG.8] FIG.8 is a perspective view of the roll formation unit for forming the roll of the reinforcement fiber sheet according to an embodiment.
[FIG.9A] FIG.9A is a plane view of the stacking unit for stacking the reinforcement fiber sheet on the mold while impregnating the reinforcement fiber sheet with resin, according to an embodiment.
[FIG.9B] FIG.9B is a side view of the stacking unit.
[FIG.10] FIG.10 is an illustration of the impregnation operation of impregnating the reinforcement fiber sheet with resin and stacking the resin-impregnated fiber sheets using the stacking units.
[FIG.11A] FIG.11A is a perspective view of a bobbin according to an embodiment.
[FIG.11B] FIG.11B is a perspective view of a bobbin according to an embodiment.
[FIG.12] FIG.12 is an illustration of impregnation of the reinforcement fiber sheet with thermohardening resin in such a state that the reinforcement fiber sheet is winded around the bobbin.

### DETAILED DESCRIPTION

Embodiments of the present disclosure will now be described in detail with reference to the accompanying drawings. It is intended, however, that unless particularly specified in these embodiments, dimensions, materials, shape, its relative positions and the like shall be interpreted as illustrative only and not limitative of the scope of the present invention which is defined by claim 1.

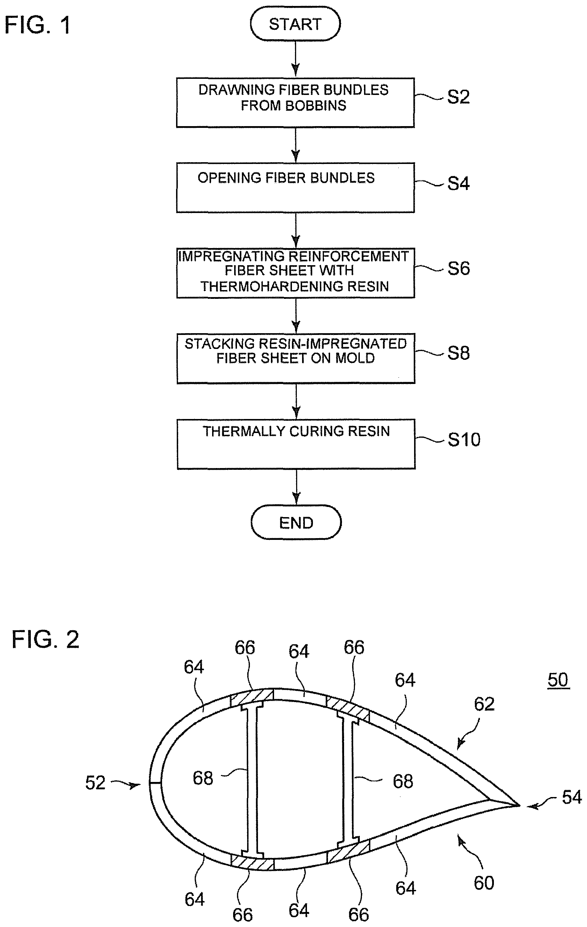

FIG.1 is a flow chart illustrating a flow of a method for manufacturing a wind turbine blade according to an embodiment. FIG.2 is a cross-sectional view of the wind turbine blade according to an embodiment.

As shown in FIG.1, first a plurality of fiber bundles each made of reinforcement fiber are drawn from a plurality of bobbins (a step S2). Then, the fiber bundles drawn from each bobbin are arranged next to one another and then opened (a step S4). By this, the adjacent two of the fiber bundles are overlapped, thereby obscuring boundaries that initially existed between the adjacent fiber bundles. Next, the process advances to a step S6 to impregnate the reinforcement fiber sheet with thermohardening resin which is solventless and in a liquid form. As a result, the resin-impregnated fiber sheet including the reinforcement fiber and the uncured thermohardening resin is formed. Then, the resin-impregnated fiber sheet in such a state that the thermohardening resin is uncured is stacked on the mold (a step S8). Finally, the thermohardening resin of the resin-impregnated fiber sheet is thermally cured on the mold (a step S10). As a result, the wind turbine blade at least partially formed of the fiber-reinforced plastic is manufactured.

Further, as the reinforcement fiber forming the fiber bundle, carbon fiber, aramid fiber, glass fiber or the like may be used, for instance. As the thermohardening resin (matrix resin) impregnated in the reinforcement fiber sheet, epoxy resin, unsaturated polyester, polyamide resin, phenol resin or the like may be used, for instance. The thermohardening resin may contain addition agents such as curing agents.

According to an embodiment, the wind turbine blade shown in FIG.2 can be obtained by performing the above steps S2 to S10. As shown in FIG.2, the wind turbine blade 50 is formed by joining an upwind-side part 60 and a downwind-side part 62 together at a leading edge joint surface 52 and a leading edge joint surface 54 as shown in FIG.2. The upwind-side part 60 and the downwind-side part 62 each includes a core member 64 formed of balsa wood, FRP or the like, and a spar cap 66 formed of fiber-reinforced plastic. The fiber-reinforced plastic forming the spar cap 66 is unidirectional fiber-reinforced plastic whose fibers are aligned unidirectionally along a longitudinal direction of the wind turbine blade 50. Between the spar cap 66 on the downwind side and the spar cap 66 on the upwind side, spars (shear webs) 68 are provided.

In some embodiments, after the step S6 of FIG.1, the resin-impregnated fiber sheet is winded around a bobbin to form a roll of the resin-impregnated fiber sheet and then the resin-impregnated fiber sheet is drawn from the roll and then stacked on the mold in the step S8. Embodiments of molding the wind turbine blade in the above manner are now described below.

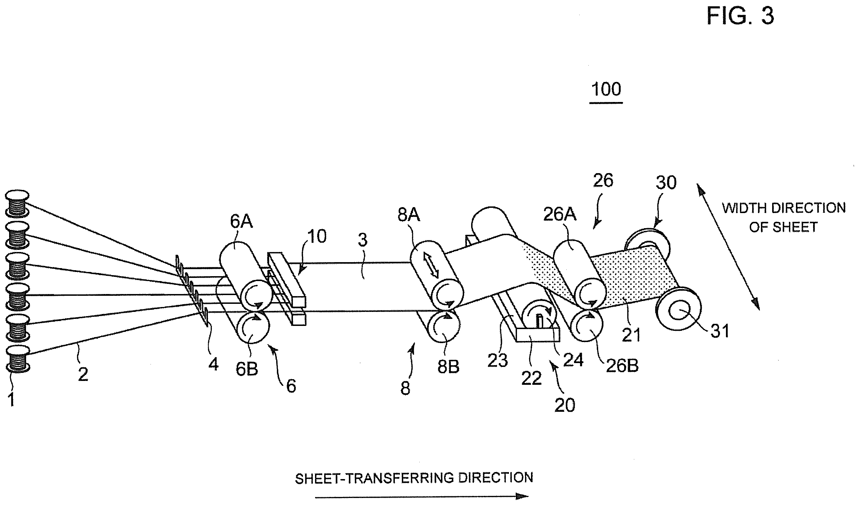

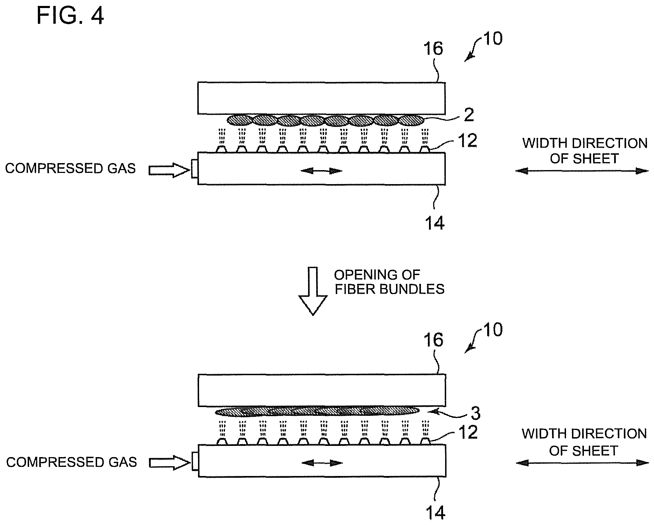

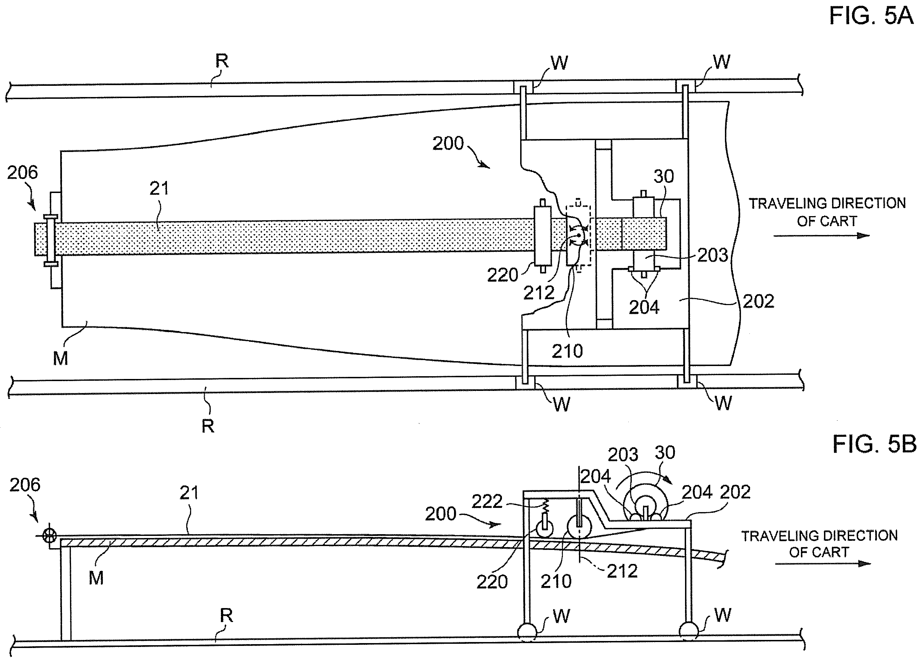

FIG.3 is a perspective illustration of a roll formation unit for forming the roll of the resin impregnated fiber sheet according to an embodiment. FIG.4 is an illustration of a fiber opening operation by a compressed gas discharge unit according to an embodiment. FIG.5A is a plane view of a stacking unit for stacking the resin-impregnated fiber sheet on the mold according to an embodiment. FIG.5B is a side view of the stacking unit for stacking the resin-impregnated fiber sheet on the mold according to the embodiment.

The roll formation unit 100 shown in FIG.3 is used for performing the step S2 to S6 of FIG.1.

In the roll formation unit 100, a plurality of fiber bundles 2 are drawn from a plurality of bobbins 1. The fiber bundles 2 are formed by bundling a plurality of filaments of reinforcement fiber and also called as roving. The fiber bundle 2 is changed its direction by a roving guide 4 and then oriented into a sheet-transferring direction. The roving guide 4 also functions to arrange the fiber bundles 2 at equal intervals from one another.

The plurality of fiber bundles 2 having passed through the roving guide 4 are transferred mainly by rollers constituting nip parts 6, 8 toward the downstream side in such a state that the fiber bundles 2 are arranged next to one another in a width direction of the sheet.

The upstream nip part 6 is formed by a top roller 6A and a bottom roller 6B. The downstream nip part 8 is located on the downstream side of the upstream nip part 6 in the sheet-transferring direction (X direction) and is formed by a top roller 8A and a bottom roller 8B. These rollers (6A, 6B, 8A, 8B) may be electric rollers.

In some embodiments, the rollers of the upstream nip part 6 rotate approximately at the same circumferential speed as the rollers of the downstream nip part 8. More specifically, the circumferential speed of the rollers 6A, 6B of the upstream nip part 6 substantially coincides with the circumferential speed of the rollers 8A, 8B of the downstream nip part 8. Thus practically no tension is placed on the plurality of fiber bundles 2 being transferred continuously between the upstream nip part 6 and the downstream nip part 8. Therefore, in such a state that the fiber bundles 2 are slightly loosened, the fiber bundles 2 are continuously transferred at a constant speed. This is advantageous during the opening step of opening the fiber bundles 2, which is described later.

To set the circumferential speed of the rollers 6A, 6B of the upstream nip part 6 the same as the circumferential speed of the rollers 8A, 8B of the downstream nip part 8, a rotation shaft of the rollers 6A, 6B may be connected to a rotation shaft of the rollers 8A, 8B by a sprocket and a chain.

Between the upstream nip part 6 and the downstream nip part 8, a compressed-gas discharge unit 10 is provided. In an embodiment, the compressed-gas discharge unit 10 is formed by a movable part 14 having at least one nozzle 12 and a stationary part 16 arranged to oppose the movable part 14 as shown in FIG.4. Formed inside the movable part 14 is a passage for introducing the compressed gas to the nozzle 12. The compressed gas supplied to the movable part 14 is supplied to the nozzle 12 via the passage inside the movable part 14 and then discharged from the nozzle 12 to the stationary part 16. The movable part 14 is movable forward and backward in the width direction of the sheet. The stationary part 16 is arranged on an opposite side of the movable part 14 from the fiber bundles 2 so as to restrain the movement of the fiber bundles 2 in a direction away from the movable part 14, which is caused by discharging of the compressed gas to the fiber bundles 2. More specifically, the stationary part 16 catches the fiber bundles 2 trying to move randomly in the direction away from the movable part 14 upon discharging the compressed gas from the nozzle 12 and the stationary part 16 applies appropriate amount of binding force to the fiber bundles 2. As a result, the fiber bundles are opened effectively.

As the compressed gas, compressed air may be used for example.

Between the movable part 14 and the stationary part 16, the fiber bundles 2 having passed through the roving guide 4 are transferred from the upstream nip part 6 in such a state the fiber bundles 2 are arranged next to one another in the width direction. Once the compressed gas is discharged at the fiber bundles 2 from the nozzle 12, the boundaries between the adjacent two of the fiber bundles 2 become obscured, thereby forming the reinforcement fiber sheet 3 (see FIG.4). More specifically, each of the fiber bundles 2 is dispersed by the compressed gas and the fibers are rearranged between the adjacent two of the fiber bundles 2, thereby making the boundary between the adjacent two of the fiber bundles 2 hard to define. As a result, the reinforcement fiber sheet 3 is obtained. In this manner, the opening of the fiber bundles 2 is efficiently performed.

Meanwhile, in such a case that the circumferential speed of the rollers of the upstream nip part 6 is the same as the circumferential speed of the rollers of the downstream nip part 8, the compressed gas is discharged at the fiber bundles 2 from the nozzle 12 in such a state that tension is hardly applied to the fiber bundles 2. The opening of the fiber bundles 2 can be performed more efficiently.

In an embodiment, a plurality of the nozzles 12 is arranged along the sheet width direction as shown in FIG.4. The nozzles 12 arranged in the sheet width direction move forward and backward in the sheet width direction with the movable part 14, thereby enhancing opening of the fiber bundles 2.

To further enhance the opening of the fiber bundles 2, more than one nozzle array formed by the plurality of nozzles 12 arranged in the sheet width direction may be provided in the sheet transferring direction.

In an embodiment, the movable part 14 having the nozzles 12 is arranged below the stationary part 16. More specifically, the fiber bundles 2 are sandwiched between the movable part 14 located below and the stationary part 16 located above. Thus the fiber bundles 2 transferred to the compressed-gas discharge unit 10 are sprayed with the compressed gas from below by the nozzles 12 and are lifted up. Thus, the binding force on the fibers of the fiber bundle 2 becomes weak, hence further enhancing rearrangement of the fibers between the adjacent two of the fiber bundles 2. In this manner, the opening of the fiber bundles 2 can be performed more efficiently.

In some embodiments, at least one of the rollers 8A, 8B forming the downstream nip part 8 vibrates so as to assist opening of the fiber bundles 2 by the compressed-gas discharge unit 10. In this case, the plurality of fiber bundles 2 are opened by the compressed-gas discharge unit 10 to form the reinforcement fiber sheet 3 and then, the fibers are rearranged at the downstream nip part 8 to obtain the reinforcement fiber sheet 3 in which fibers are evenly distributed in the sheet width direction. During this operation, if the circumferential speed of the rollers of the upstream nip part 6 is the same as the circumferential speed of the rollers of the downstream nip part 8, the fiber bundles come in contact with the rollers 8A, 8B in such a state that the reinforcement fiber sheet 3 is hardly subjected to the tension. As a result, opening of the fiber bundles 2 can be assisted more efficiently.

In another embodiment, the compressed-gas discharge unit 10 is not provided. Instead, the opening of the fiber bundles 2 is performed by vibrating at least one of the rollers 8A, 8B of the downstream nip part 8. In yet another embodiment, a vibration roller for opening the fiber bundles 2 is separately provided between the upstream nip part 6 and the downstream nip part 8.

In an embodiment, at least one of the rollers 8A, 8B of the downstream nip part 8 is vibrated along the width direction of the reinforcement fiber sheet 3 (the sheet width direction) as shown in FIG.3. This further promotes rearranging of the fibers between the adjacent fiber bundles 2, hence performing the opening of the fiber bundles 2 efficiently.

The reinforcement fiber sheet 3 formed by opening the fiber bundles 2 using at least one of the compressed-gas discharge unit 10 or the downstream nip part 8 is transferred to an impregnation unit 20 arranged downstream of the downstream nip part 8.

In some embodiments, the impregnation unit 20 includes a resin bath 22 storing thermohardening resin 23 which is solventless and is in a liquid form, and an impregnation roller 24 for impregnating the reinforcement fiber sheet 3 with the thermohardening resin 23 in the resin bath 22. The impregnation roller 24 is arranged so that a bottom part is immersed in the thermohardening resin 23 stored in the resin bath 22 and that a top part contacts the reinforcement fiber sheet 3. In the impregnation unit 20, the rotation of the impregnation roller 24 causes a portion of the thermohardening resin 23 in the resin bath 22 to adhere to an outer periphery of the impregnation roller 24 and then supplied to a contact part of the reinforcement fiber sheet 3 contacting the impregnation roller 24. Then, the thermohardening resin 23 adhered to the outer periphery of the impregnation roller 24 is transferred to the reinforcement fiber sheet 3. In this manner, the reinforcement fiber sheet 3 is impregnated with the thermohardening resin 23. As a result, the resin-impregnated fiber sheet 21 including the reinforcement fiber and the thermohardening resin 23 is formed.

Further, the thermohardening resin 23 stored in the resin bath 22 is in a liquid form and is solventless. The thermohardening resin 23 has viscosity of, for instance, 50 to 150mPA • s (typically about 90mPA • s) in a temperature condition of 40°C immediately after adding curing agents. Further, the viscosity of the thermohardening resin 23 after the curing agents are added, may rise gradually with time.

In an embodiment, the thermohardening resin 23 in the resin bath 22 is heated to a setting temperature by a heater provided in the resin bath 22. In another embodiment, the heater is provided upstream of the impregnation unit 20 of the roll formation unit 100 so as to adjust the temperature of the reinforcement fiber sheet 3 immediately before contacting the outer periphery of the impregnation roller 24, to the setting temperature. As a result, this promotes the impregnation of the reinforcement fiber sheet 3 with the thermohardening resin 23.

The setting temperature of the thermohardening resin 23 or the reinforcement fiber sheet 3 is selected within the range of 35 to 60°C for instance. The setting temperature may be determined so that the impregnation of the reinforcement fiber sheet 3 with the thermohardening resin 23 can be performed appropriately in accordance with viscosity of the thermohardening resin 23 and affinity of the thermohardening resin 23 with the reinforcement fiber sheet 3. For instance, the setting temperature of the thermohardening resin 23 or the reinforcement fiber sheet 3 is determined so that the viscosity of the thermohardening resin 23 during the impregnation of the reinforcement fiber sheet 3 is 30 to 170Pa • s.

On a downstream of the impregnation unit 20, a resin-amount adjustment unit 26 is provided. The resin-amount adjustment unit 26 adjusts an amount of the thermohardening resin 23 contained in the resin-impregnated fiber sheet 21. As a result, a content ratio of the thermohardening resin 23 to the reinforcement fiber in the resin-impregnated fiber sheet 21 can be appropriately adjusted. This leads to improvement of the strength of the wind turbine blade.

In some embodiments, the resin-amount adjustment unit 26 includes a pair of rollers 26A, 26B for nipping the resin-impregnated fiber sheet 21 therebetween as shown in FIG.3. The resin-impregnated fiber sheet 21 nipped between the pair of rollers 26A, 26B and excess of the thermohardening resin 23 is scraped off so as to adjust the contained amount of the resin.

The resin-impregnated fiber sheet 21 passes through the resin-amount adjustment unit 26 and is then winded around the bobbin 31 while the thermohardening resin 23 is still uncured. As a result, a roll 30 of the resin-impregnated fiber sheet 21 is obtained.

To prevent adhesion between layers of the resin-impregnated fiber sheet 21 in the roll 30, a peelable sheet that can be easily peeled off later may be attached to at least one surface of the resin-impregnated fiber sheet 21 after passing through the resin-amount adjustment unit 26. Thus at least one surface of the resin-impregnated fiber sheet 21 is covered by the peelable sheet when the resin-impregnated fiber sheet 21 is winded around the bobbin 31. As a result, the adhesion between the layers of the resin-impregnated fiber sheet 21 in the roll 30 can be prevented.

The roll 30 of the resin-impregnated fiber sheet 21 is installed in a stacking unit 200 as shown in FIG.5A and FIG.5B and is stacked onto the mold M by the stacking unit 200. More specifically, the step S8 of FIG.1 is performed by the stacking unit 200.

In the resin-impregnated fiber sheet 21 of the roll 30 to be stacked onto the mold M, the thermohardening resin 23 is in an uncured state. The "uncured state" herein indicates the state where a reaction rate of the thermohardening resin 23 before or when reaching the B stage is low. For instance, in such a case that the reaction rate of the thermohardening resin at the B stage is 50%, the reaction rate of the thermohardening resin 23 stacked onto the mold M is not higher than 30% (typically not more than 10%).

In some embodiments, the stacking unit 200 is a cart equipped with a frame 303 where the roll 30 of the resin-impregnated fiber sheet 21 is installed and wheel W for moving the frame 202 along a rail R.

In the stacking unit (cart) 200, the roll 30 having the resin-impregnated fiber sheet 21 winded around is attached rotatably to the frame 202. An end of the resin-impregnated fiber sheet 21 drawn from the roll 30 is secured by a clamp 206 to the mold M or a mount which supports the mold M. Thus, when the stacking unit 200 moves away from the clamp 206 on the rail R, the resin-impregnated fiber sheet 21 is drawn from the roll 30 for a length corresponding to a travel distance of the stacking unit 200 and is stacked onto the mold M.

In an embodiment, a pair of tension rollers 204 is provided on the frame 202 so as to contact the outer circumferential surface of a rotation shaft 203 of the roll 30. The tension rollers 204 are provided with a braking mechanism (not shown). By means of the braking mechanism, tension is constantly applied to the resin-impregnated fiber sheet 21 drawn from the roll 30. The braking mechanism may be a brake shoe pressed against a shaft of the tension roller 204.

In the stacking unit (cart) 200, a sheet-position adjustment roller 210 and a sheet press roller 220 are attached to the frame 202.

The sheet-position adjustment roller 210 is supported by the frame 202 turnably around a turning axis 212 as indicated by arrows in FIG.5A. The turning axis 212 extends in a direction approximately perpendicular to the mold M (in a vertical direction in the embodiment shown in FIG.5A and FIG.5B). Thus the angle between the longitudinal direction of the sheet-position adjustment roller 210 and the traveling direction of the cart is adjustable. Upon turning the sheet-position adjustment roller 210 around the turning axis 212, the resin-impregnated fiber sheet 21 drawn from the roll 30 is subjected to a component force from the sheet-position adjustment roller 210 in a direction perpendicular to the traveling direction of the cart. This causes the resin-impregnated fiber sheet 21 to move in the above direction. As a result, the position of the resin-impregnated fiber sheet 21 on the mold M is adjusted.

In an embodiment, the sheet-position adjustment roller 210 is configured lockable at a desired angular position. In such case, the sheet-position adjustment roller 210 is normally locked at an angular position where its longitudinal direction is perpendicular to the traveling direction of the cart (at a normal angular position), and the lock is released only when the position of the resin-impregnated fiber sheet 21 needs to be corrected. In correspondence to a correction amount of the position of the resin-impregnated fiber sheet 21, the sheet-position adjustment roller 210 is turned around the turning axis 212 and the sheet-position adjustment roller 210 is locked at a desired angular position. Once the position correction of the resin-impregnated fiber sheet 21 is finished, the lock of the sheet-position adjustment roller 210 is released to allow the sheet-position adjustment roller 210 to return to its normal angular position, where the sheet-position adjustment roller 210 is locked again.

The sheet press roller 220 is attached to the frame 202 via a biasing member 222. The biasing member 222 biases the sheet press roller 220 against the mold M. Thus, the resin-impregnated fiber sheet 21 is evenly pressed onto the mold M by the sheet press roller 220.

In an embodiment, the sheet press roller 220 is smaller in diameter than the sheet-position adjustment roller 210. This makes it easy for the sheet press roller 220 to move following the complex shape of the mold M.

After the resin-impregnated fiber sheet 21 is stacked onto the mold M by the stacking unit configured as described above, the thermohardening resin is thermally cured on the mold, thereby forming the wind turbine blade. In the step of molding the wind turbine blade, VaRTM (Vacuum assisted Resin Transfer Molding) may be used.

In some embodiments, an operation of stacking the resin-impregnated fiber sheet 21 is performed by the stacking unit 200 to form the spar cap 66 of the wind turbine blade 50 shown in FIG.2.

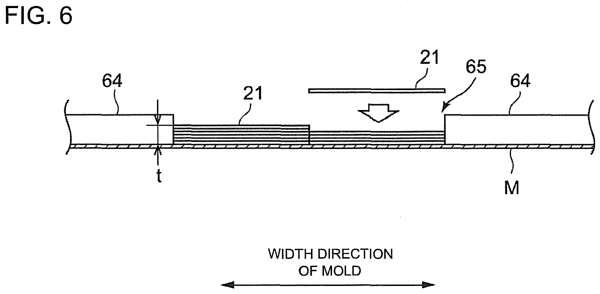

FIG.6 is a cross-sectional illustration of an operation of stacking the resin-impregnated fiber sheet 21 on the mold M according to an embodiment. As shown in FIG.6, core members 64 are arranged along the longitudinal direction of the mold M and a groove 65 is formed on the mold M between the core members 64. The resin-impregnated fiber sheets 21 are stacked in the groove 65 by the stacking unit 200. In the stacking operation, the resin-impregnated resin sheets 21 may be arranged next to each other in the width direction of the mold M and stacked.

In such a case that the resin-impregnated fiber sheets 21 are stacked using the stacking unit 200, an uneven surface is formed over a total thickness t of the stacked resin-impregnated fiber sheets 21 at their ends opposite from the clamp 206. If the uneven surface affects the quality of the wind turbine blade, the uneven surface may be puttied around to form a gently-inclined surface over the uneven surface.

In some embodiments, a plurality of the stacking units 200 having the above structure are used to perform the stacking operation of the resin-impregnated fiber sheets 21 onto the mold M.

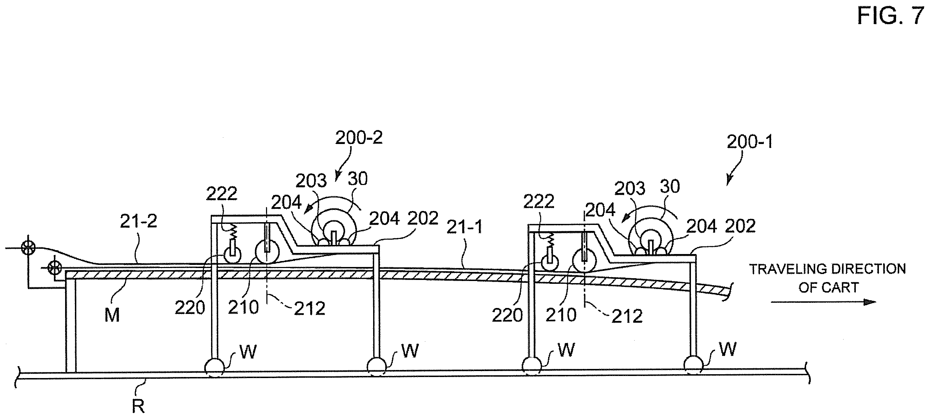

FIG.7 is an illustration of the operation of stacking the resin-impregnated fiber sheets using a plurality of the stacking units 200. As shown in the drawing, a leading stacking unit 200-1 stacks a resin-impregnated fiber sheet 21-1 onto the mold M, and then a following stacking unit 200-2 stacks a resin-impregnated fiber sheet 21-2 onto the resin-impregnated fiber sheet 21-1. With use of a plurality of the stacking units 2000 as described above, it is possible to decrease a cycle time of stacking the resin-impregnated fiber sheets 21 onto the mold M and also to improve the production efficiency of the wind turbine blade.

In some embodiments, the reinforcement fiber sheet obtained in the step S4 of FIG.1 is winded around a bobbin to form a roll of the reinforcement fiber sheet. In the steps S6 and S8, the reinforcement fiber sheet is drawn from the roll and then is stacked onto the mold while being impregnated with resin.

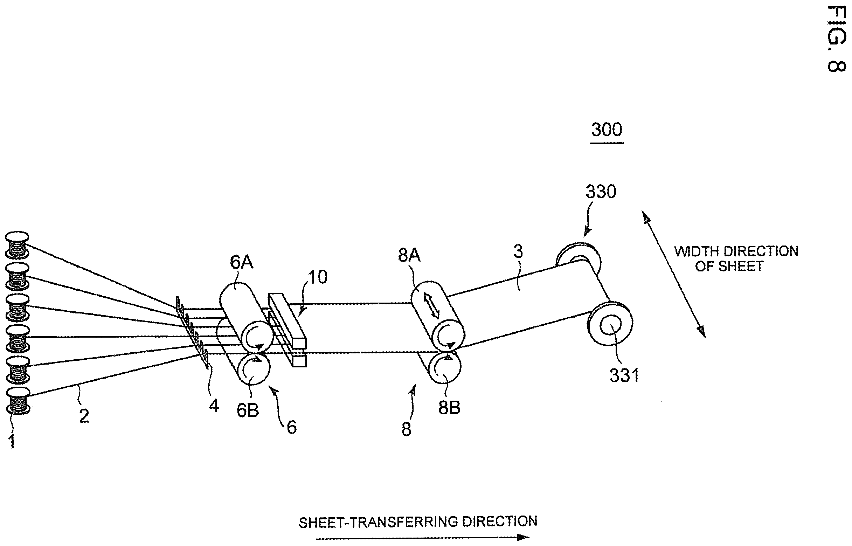

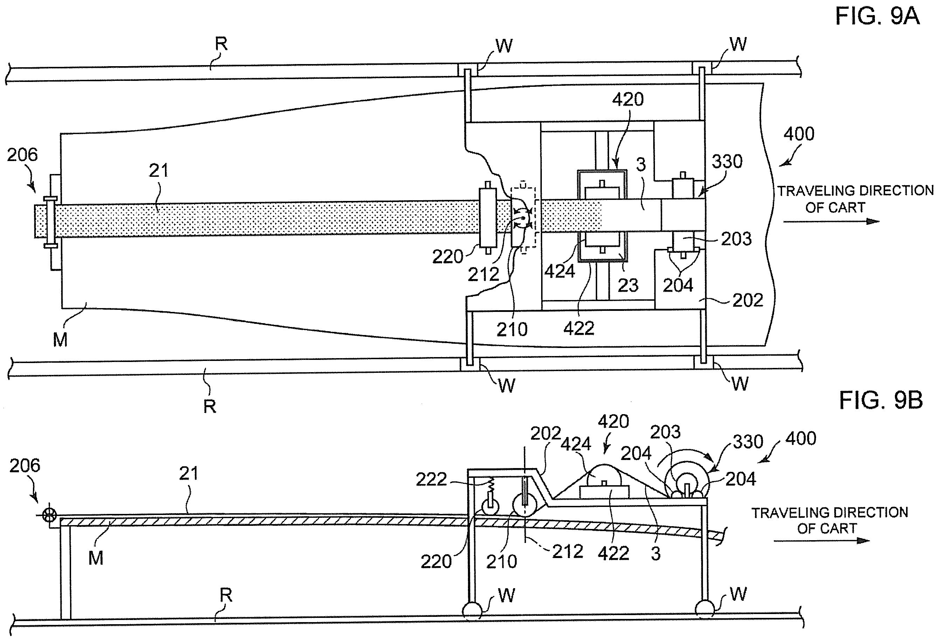

FIG.8 is a perspective view of the roll formation unit for forming the roll of the reinforcement fiber sheet according to an embodiment. FIG.9A is a plane view of the stacking unit for stacking the reinforcement fiber sheet on the mold while impregnating the reinforcement fiber sheet with resin, according to an embodiment. FIG.9B is a side view of the stacking unit. In FIG.8, the same reference numerals are given without adding explanations for those configurations that are the same as the roll formation unit 100 shown in FIG.3. In the same manner, the same reference numerals are given without adding explanations in FIG.9A and FIG.9B for those configurations that are the same as the stacking unit 200 shown in FIG.5A and FIG.5B.

A roll formation unit 300 shown in FIG.8 is used to perform the steps S2 to S4 of FIG.1.

The roll formation unit 300 is equivalent to the roll formation unit 100 without the impregnation unit 10 and the resin-amount adjustment unit 26. Thus the final product obtained by the roll formation unit 300 is a roll 330 of the reinforcement fiber sheet 3 formed by winding around a bobbin 331 the reinforcement fiber sheet 3 having passed through the downstream nip part 8.

The structure of the roll formation unit 300 on the upstream side of the downstream nip part 8 is substantially the same as that of the roll formation unit 100 shown in FIG.3. More specifically, in the roll formation unit 300, the bobbin around which the fiber bundle 2 is winded, the roving guide 4, the upstream nip part 6, the compressed-gas discharge unit 10 and the downstream nip part 8 are provided in this order from the upstream side to the downstream side. Further, in some embodiments, at least one of the rollers 8A, 8B forming the downstream nip part 8 vibrates so as to assist opening of the fiber bundles 2 by the compressed-gas discharge unit 10. In another embodiment, the compressed-gas discharge unit 10 is not provided. Instead, the opening of the fiber bundles 2 is performed by vibrating at least one of the rollers 8A, 8B of the downstream nip part 8. In yet another embodiment, a vibration roller for opening the fiber bundles 2 is separately provided between the upstream nip part 6 and the downstream nip part 8.

The roll 330 of the reinforcement fiber sheet 3 formed by means of the roll formation unit 300 is installed in a stacking unit 400 shown in FIG.9A and FIG.9B.

The stacking unit 400 is equivalent the stacking unit 200 shown in FIG.5A and FIG.5B with an impregnation unit 420. More specifically, in the stacking unit 400, the impregnation unit 420 is provided between the roll 330 and the sheet-position adjustment roller 210. The impregnation unit 420 impregnates the reinforcement fiber sheet 3 drawn from the roll 330 with the thermohardening resin 23.

In some embodiments, the impregnation unit 420 includes a resin bath 422 storing the thermohardening resin 23 which is solventless and is in a liquid form, and an impregnation roller 424 for impregnating the reinforcement fiber sheet 3 drawn from the roll 330 with the thermohardening resin 23. The impregnation roller 424 is arranged so that a bottom part is immersed in the thermohardening resin 23 stored in the resin bath 422 and that a top part contacts the reinforcement fiber sheet 3. In the impregnation unit 420, the rotation of the impregnation roller 424 causes a portion of the thermohardening resin 23 in the resin bath 422 to adhere to an outer periphery of the impregnation roller 424 and then supplied to a contact part of the reinforcement fiber sheet 3 contacting the impregnation roller 24. Then, the thermohardening resin 23 adhered to the outer periphery of the impregnation roller 424 is transferred to the reinforcement fiber sheet 3. In this manner, the reinforcement fiber sheet 21 is impregnated with the thermohardening resin 23. As a result, the resin-impregnated fiber sheet 21 including the reinforcement fiber and the thermohardening resin 23 is obtained.

Further, the thermohardening resin 23 stored in the resin bath 22 is in a liquid form and is solventless. The thermohardening resin 23 has viscosity of, for instance, 50 to 150mPA • s (typically about 90mPA • s) in a temperature condition of 40°C immediately after adding curing agents. Further, the viscosity of the thermohardening resin 23 after adding the curing agents may rise gradually with time.

In an embodiment, the thermohardening resin 23 in the resin bath 422 is heated to a setting temperature by a heater provided in the resin bath 422. In another embodiment, the heater is provided upstream of the impregnation unit 420 of the stacking unit 400 so as to adjust the temperature of the reinforcement fiber sheet 3 immediately before contacting the outer periphery of the impregnation roller 424, to the setting temperature. As a result, this promotes the impregnation of the reinforcement fiber sheet 3 with the thermohardening resin 23.

The setting temperature of the thermohardening resin 23 or the reinforcement fiber sheet 3 is selected within the range of 35 to 60°C for instance. The setting temperature may be determined so that the impregnation of the reinforcement fiber sheet 3 with the thermohardening resin 23 can be performed appropriately in accordance with viscosity of the thermohardening resin 23 and affinity of the thermohardening resin 23 with the reinforcement fiber sheet 3. For instance, the setting temperature of the thermohardening resin 23 or the reinforcement fiber sheet 3 is determined so that the viscosity of the thermohardening resin 23 during the impregnation of the reinforcement fiber sheet 3 is 30 to 170 Pa • s.

The downstream structure of the stacking unit 400, which is downstream from the impregnation unit 420 (i.e. the sheet-position adjustment roller 210 and the sheet press roller 220) is substantially the same as that of the stacking unit shown in FIG.5A and FIG.5B.

In some embodiments, a plurality of the stacking units 400 having the above structure are used for the impregnation operation of impregnating the reinforcement fiber sheet 3 with the thermohardening resin 23 and for the stacking operation of stacking the resin-impregnated fiber sheets 21 onto the mold M.

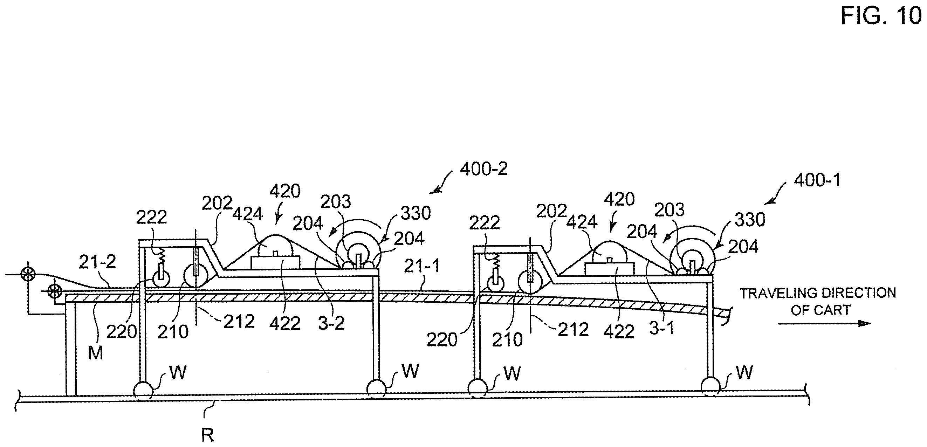

FIG.10 is an illustration of the impregnation operation of impregnating the reinforcement fiber sheet 3 with the resin and the stacking operation of stacking the resin-impregnated fiber sheets using a plurality of the stacking units 400. As shown in the drawing, a leading stacking unit 400-1 impregnates the reinforcement fiber sheet 3-1 with the thermohardening resin 23 so as to form the resin-impregnated fiber sheet 21-1, and then stacks a resin-impregnated fiber sheet 21-1 onto the mold M, and then a following stacking unit 400-2 stacks a resin-impregnated fiber sheet 21-2 onto the resin-impregnated fiber sheet 21-1. With use of a plurality of the stacking units 400 as described above, it is possible to decrease a cycle time of impregnating the reinforcement fiber sheet 3 with the thermohardening resin 23 and stacking the resin-impregnated fiber sheets 21 onto the mold M and also to improve the production efficiency of the wind turbine blade.

In an embodiment, the reinforcement fiber sheet 3 of the roll 330 is impregnated with the thermohardening resin 23 in such a state that the reinforcement fiber sheet 3 is still winded around the bobbin 331.

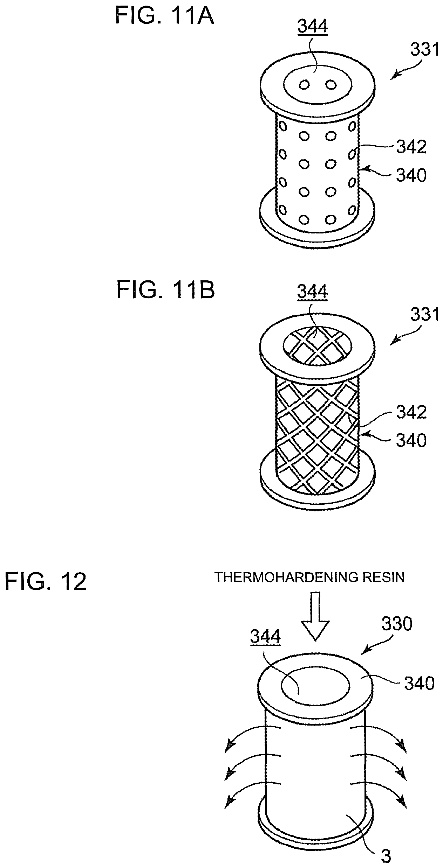

FIG.11A and FIG.11B are perspective views of the bobbin 331 according to embodiments. FIG.12 is an illustration of the impregnation of the reinforcement fiber sheet 3 with thermohardening resin 23 in such a state that the reinforcement fiber sheet 3 is winded around the bobbin 331.

The bobbin 331 is provided with openings 342 in a core 340. The openings 342 may be a plurality of through-holes bored through the core 340 as shown in FIG.11A, or may be a plurality of net-like through-holes bored through the core 340 as shown in FIG.11B.

As shown in FIG.12, the thermohardening resin 23 is injected into an interior space 344 of the core 340 of the roll 330 so as to impregnate the reinforcement fiber sheet 3 with the thermohardening resin 23 through the openings 342 formed in the core 340. In this manner, the resin-impregnated fiber sheet 21 is obtained.

As a result, it is possible to perform the impregnation of the reinforcement fiber sheet 3 with the thermohardening resin 23 in a prompt manner. Further, the roll 330 of the reinforcement fiber sheet 3 before being impregnated with the thermohardening resin 23 can be stored for long periods even at ordinary temperatures. This eliminates the need for refrigeration or the like for preserving the roll 330 for long periods, resulting in cost reduction.

To prevent adhesion between layers of the resin-impregnated fiber sheet 21 in the roll 330, a peelable sheet that can be easily peeled off later may be provided between the layers of the resin-impregnated fiber sheet 21. The peelable sheet has plurality of through-holes to allow the thermohardening resin 23 injected into the interior space 344 of the roll 330 to pass through. In another embodiment, the peelable sheet has a net-like shape.

By interposing the peelable sheet between the layers of the reinforcement fiber sheet 3 in the above manner, it is possible to prevent adhesion between the layers of the resin-impregnated fiber sheet 21 obtained by injecting the thermohardening resin 23 to the interior space of the 330.

In some embodiments, the roll 330 of the resin-impregnated fiber sheet 21 formed by impregnating the reinforcement fiber sheet 3 with the thermohardening resin 23 is placed in the stacking unit 200 shown in FIG.5A and FIG.5B and then the stacking operation of the resin-impregnated fiber sheet 21 onto the mold M is performed.

As described above, in the above embodiments, the reinforcement fiber sheet 3 obtained from the fiber bundles 2 having been drawn from the bobbins is impregnated with the thermohardening resin 23 to form the resin-impregnated fiber sheet 21 and the resin-impregnated fiber sheet 21 is used to mold the wind turbine blade. Thus it is possible to reduce time and labor for performing the stacking operation. Further, there is fundamentally no need to take possible causes of the component defects of the wind turbine blade into consideration, such as twisting and waving in the roving bundle.

The thermohardening resin 23 is in a liquid form, hence having superior impregnating ability with respect to the reinforcement fiber sheet 3. Further, the thermohardening resin 23 is solventless and hence a solvent-volatilizing step can be removed. Furthermore, the resin-impregnated fiber sheet 21 including the uncured thermohardening resin is placed onto the mold M to mold the wind turbine blade and thus the liquidity of the thermohardening resin 23 during the molding is superior. Therefore, it is possible to obtain high-quality wind turbine blade.
Thus at least one surface of the resin-impregnated fiber sheet 21 is covered by the peelable sheet when the resin-impregnated fiber sheet 21 is winded around the bobbin 31. As a result, the adhesion between the layers of the resin-impregnated fiber sheet 21 in the roll 30 can be prevented.

### [Reference Signs list]

- 1: BOBBIN
- 3: REINFORCEMENT FIBER
- 4: ROVING GUIDE
- 6: UPSTREAM NIP PART
- 8: DOWNSTREAM NIP PART
- 10: COMPRESSED-GAS DISCHARGE UNIT
- 12: NOZZLE
- 14: MOVABLE PART
- 16: STATIONARY PART
- 20: IMPREGNATION UNIT
- 21: RESIN-IMPREGNATED FIBER SHEET
- 22: RESIN BATH
- 23: THERMOHARDENING RESIN
- 24: IMPREGNATION ROLLER
- 26: RESIN-AMOUNT ADJUSTMENT UNIT
- 30: ROLL
- 31: BOBBIN
- 50: WIND TURBINE BLADE
- 52: LEADING EDGE JOINT SURFACE
- 54: TRAILING EDGE JOINT SURFACE
- 60: UPWIND-SIDE PART
- 62: DOWNWIND-SIDE PART
- 64: CORE MEMBER
- 66: SPAR CAP
- 68: SPAR (SHEAR WEB)
- 100: ROLL FORMATION UNIT
- 200: STACKING UNIT
- 202: FRAME
- 203: ROTATION SHAFT
- 204: TENSION ROLLER
- 206: CLAMP
- 210: SHEET-POSITION ADJUSTMENT ROLLER
- 212: TURNING AXIS
- 220: SHEET PRESS ROLLER
- 222: BIASING MEMBER
- 300: ROLL FORMATION UNIT
- 330: ROLL
- 331: BOBBIN
- 340: CORE
- 342: OPENING
- 344: INTERIOR SPACE
- 400: STACKING UNIT
- 420: IMPREGNATION UNIT
- 422: RESIN BATH
- 424: IMPREGNATION ROLLER

## Claims

1. A method for manufacturing a wind turbine blade (50) which is at least partially formed of fiber-reinforced plastic, the method comprising:
a fiber drawing step of drawing a plurality of fiber bundles (2) each made of reinforcement fiber from a plurality of bobbins (1), respectively;
a reinforcement fiber sheet formation step of arranging the plurality of fiber bundles (2) drawn from the bobbins (1) next to one another and opening the plurality of fiber bundles (2) so as to overlap adjacent two of the fiber bundles (2) and form a reinforcement fiber sheet (3) from the plurality of fiber bundles (2);
a resin-impregnated fiber sheet formation step of impregnating the reinforcement fiber sheet (3) with a thermohardening resin (23) which is solventless and in a liquid form so as to form a resin-impregnated fiber sheet (21) including the reinforcement fiber and the uncured thermohardening resin; and
a molding step of arranging on a mold (M) the resin-impregnated fiber sheet (21) in such a state that the thermohardening resin (23) is uncured and then thermally curing the thermohardening resin (23) of the resin-impregnated fiber sheet (21) on the mold (M) so as to mold the wind turbine blade (50),
the method being **characterized in that**, in the reinforcement fiber sheet formation step, the plurality of fiber bundles (2) being transferred continuously are opened between an upstream nip part (6) and a downstream nip part (8) each including a pair of rollers (6A, 6B, 8A, 8B) in such a state that the plurality of fiber bundles (2) are nipped between the pair of rollers (6A, 6B, 8A, 8B) of each of the upstream nip part (6) and the downstream nip part (8),
wherein the pair of rollers (6A, 6B) of the upstream nip part (6) rotates at the same circumferential speed as the pair of rollers (8A, 8B) of the downstream nip part (8), and
wherein, in the reinforcement fiber sheet formation step, compressed gas is
sprayed from below by at least one nozzle (12) disposed below the fiber bundles (2) between the upstream nip part (6) and the downstream nip part (8) so as to face the plurality of fiber bundles (2) arranged next to one another, and the plurality of fiber bundles (2) are opened by the compressed gas, wherein between the upstream nip part (6) and the downstream nip part (8) a compressed gas discharge unit (10) is provided, the unit (10) being formed by a movable part (14) having the at least one nozzle (12) and a stationary part (16) arranged to oppose the movable part (14).

2. The method for manufacturing the wind turbine blade (50) according to claim 1,
wherein, in the reinforcement fiber sheet formation step, the fiber bundles (2) are opened by compressed gas discharged from at least one nozzle (12) while moving the at least one nozzle (12) back and forth in a width direction of the reinforcement fiber sheet (3), the at least one nozzle (12) being placed between the upstream nip part (6) and the downstream nip part (8) to oppose the plurality of fiber bundles (2).

3. The method for manufacturing the wind turbine blade (50) according to claim 1,
wherein, in the reinforcement fiber sheet formation step, at least one of the rollers (8A, 8B) of the downstream nip part (8) is vibrated so as to open the fiber bundles (2).

4. The method for manufacturing the wind turbine blade (50) according to claim 3,
wherein, in the reinforcement fiber sheet formation step, the at least one of the rollers (8A, 8B) is vibrated in a width direction of the reinforcement fiber sheet (3).

5. The method for manufacturing the wind turbine blade (50) according to claim 1,
wherein, in the resin-impregnated fiber sheet formation step, after impregnating the reinforcement fiber sheet (3) with the uncured thermohardening resin (23), the resin-impregnated fiber sheet is nipped between a pair of rollers (26A, 26B) to adjust an amount of the uncured thermohardening resin contained in the resin-impregnated fiber sheet (21).

6. The method for manufacturing the wind turbine blade (50) according to claim 1, further comprising:
a roll formation step of winding the resin-impregnated fiber sheet (21) around a bobbin (31) so as to form at least one roll (30) of the resin-impregnated fiber sheet (21),
wherein, in the molding step, the resin-impregnated fiber sheets (21) are drawn from the at least one roll (30) and stacked onto the mold (M).

7. The method for manufacturing the wind turbine blade (50) according to claim 6,
wherein, in the molding step, in such a state that one end of the resin-impregnated fiber sheet (21) of the at least one roll (30) is secured by a clamp (206), a cart (200) installed with the at least one roll (30) is moved away from the clamp (206) in a longitudinal direction of the mold (M) and the resin-impregnated fiber sheet (21) having been drawn from the at least one roll (30) is pressed onto the mold (M) by at least one roller (220) attached to the cart (200).

8. The method for manufacturing the wind turbine blade (50) according to claim 1, further comprising:
a roll formation step of winding the reinforcement fiber sheet around a bobbin (331) so as to form at least one roll (330) of the reinforcement fiber sheet,
wherein in the resin-impregnated fiber sheet formation step, in such a state that one end of the reinforcement fiber sheet (3) of the at least one roll (330) is secured by a clamp (206), a cart (400) installed with the at least one roll (330) of the reinforcement fiber sheet (3) is moved away from the clamp (206) in a longitudinal direction of the mold (M) to draw the reinforcement fiber sheet (3) from the at least one roll (330), and the reinforcement fiber sheet (3) is impregnated with the uncured thermohardening resin (23) by an impregnation unit (420) provided in the cart (400) so as to form the resin-impregnated fiber sheet,
wherein, in the molding step, the resin-impregnated fiber sheet transferred from the impregnation unit (420) is pressed onto the mold (M) by at least one roller (220) attached to the cart (400).

9. The method for manufacturing the wind turbine blade (50) according to claim 1,
wherein, in the resin-impregnated fiber sheet formation step, the thermohardening resin (23) is injected to an interior space (344) of a core (340) of a bobbin (331) around which the reinforcement fiber sheet (3) composed of the reinforcement fiber is winded to form a roll (330) of the reinforcement fiber sheet, and the reinforcement fiber sheet is impregnated with the thermohardening resin (23) having passed through an opening (342) formed in the core (340) of the bobbin (331).

10. The method for manufacturing the wind turbine blade (50) according to claim 1,
wherein, in the molding step, the resin-impregnated fiber sheet (21) is arranged on the mold (M) between a pair of core members (64) of the wind turbine blade (50) arranged in a longitudinal direction of the mold, and the thermohardening resin (23) of the resin-impregnated fiber sheet (21) is thermally cured on the mold (M) so as to form a spar cap (66) of the wind turbine blade (50) between the pair of core members (64).

11. The method for manufacturing the wind turbine blade (50) according to claim 1,
wherein the fiber-reinforced plastic is CFRP including carbon fiber as the reinforcement fiber.

## Patentansprüche

1. Verfahren zum Herstellen eines Windturbinenblatts (50), das mindestens teilweise aus faserverstärktem Kunststoff gebildet ist, wobei das Verfahren umfasst:
einen Faserabziehschritt des Abziehens mehrerer Faserbündel (2), die jeweils aus Verstärkungsfasern hergestellt sind, von mehreren entsprechenden Spulen (1),
einen Verstärkungsfaserbahnbildungsschritt des Anordnens der mehreren Faserbündel (2), die von den Spulen (1) abgezogen werden, nebeneinander und des Öffnens der mehreren Faserbündel (2), um benachbarte zwei der Faserbündel (2) zu überlappen und aus den mehreren Faserbündeln (2) eine Verstärkungsfaserbahn (3) zu bilden,
einen Schritt zur Bildung einer harzimprägnierten Faserbahn des Imprägnierens der Verstärkungsfaserbahn (3) mit einem duroplastischen Harz (23), das lösemittelfrei ist und in flüssiger Form vorliegt, um eine harzimprägnierte Faserbahn (21) zu bilden, welche die Verstärkungsfaser und das nicht ausgehärtete duroplastische Harz umfasst, und
einen Formungsschritt des Anordnens der harzimprägnierten Faserbahn (21) auf einem Formwerkzeug (M) in einem derartigen Zustand, dass das duroplastische Harz (23) nicht ausgehärtet ist, und dann des thermischen Aushärtens des duroplastischen Harzes (23) der harzimprägnierten Faserbahn (21) auf dem Formwerkzeug (M), um das Windturbinenblatt (50) zu formen,
wobei das Verfahren **dadurch gekennzeichnet ist, dass** in dem Verstärkungsfaserbahnbildungsschritt die kontinuierlich überführt werdenden mehreren Faserbündel (2) zwischen einem stromaufwärtigen Walzenspaltteil (6) und einem stromabwärtigen Walzenspaltteil (8) geöffnet werden, die jeweils ein Paar von Walzen (6A, 6B, 8A, 8B) in einem derartigen Zustand umfassen, dass die mehreren Faserbündel (2) zwischen dem Paar von Walzen (6A, 6B, 8A, 8B) von sowohl dem stromaufwärtigen Walzenspaltteil (6) als auch dem stromabwärtigen Walzenspaltteil (8) eingeklemmt werden,
wobei sich das Paar von Walzen (6A, 6B) des stromaufwärtigen Walzenspaltteils (6) mit derselben Umfangsgeschwindigkeit wie das Paar von Walzen (8A, 8B) des stromabwärtigen Walzenspaltteils (8) dreht und
wobei in dem Verstärkungsfaserbahnbildungsschritt Druckgas von unten durch mindestens eine Düse (12) zugesprüht wird, die unter den Faserbündeln (2) zwischen dem stromaufwärtigen Walzenspaltteil (6) und dem stromabwärtigen Walzenspaltteil (8) angeordnet ist, um den mehreren Faserbündeln (2), die nebeneinander angeordnet sind, zugewandt zu sein, und die mehreren Faserbündel (2) durch das Druckgas geöffnet werden, wobei zwischen dem stromaufwärtigen Walzenspaltteil (6) und dem stromabwärtigen Walzenspaltteil (8) eine Druckgasabgabeeinheit (10) vorgesehen ist, wobei die Einheit (10) gebildet wird durch einen beweglichen Teil (14), der die mindestens eine Düse (12) aufweist, und einen stationären Teil (16), der derart angeordnet ist, dass er dem beweglichen Teil (14) gegenüber liegt.

2. Verfahren zum Herstellen des Windturbinenblatts (50) nach Anspruch 1,
wobei in dem Verstärkungsfaserbahnbildungsschritt die Faserbündel (2) durch Druckgas geöffnet werden, das von mindestens einer Düse (12) abgegeben wird, während die mindestens eine Düse (12) in einer Breitenrichtung der Verstärkungsfaserbahn (3) hin und her bewegt wird, wobei die mindestens eine Düse (12) zwischen dem stromaufwärtigen Walzenspaltteil (6) und dem stromabwärtigen Walzenspaltteil (8) derart angeordnet wird, dass sie den mehreren Faserbündeln (2) gegenüberliegt.

3. Verfahren zum Herstellen des Windturbinenblatts (50) nach Anspruch 1,
wobei in dem Verstärkungsfaserbahnbildungsschritt mindestens eine der Walzen (8A, 8B) des stromabwärtigen Walzenspaltteils (8) gerüttelt wird, um die Faserbündel (2) zu öffnen.

4. Verfahren zum Herstellen des Windturbinenblatts (50) nach Anspruch 3,
wobei in dem Verstärkungsfaserbahnbildungsschritt die mindestens eine der Walzen (8A, 8B) in einer Breitenrichtung der Verstärkungsfaserbahn (3) gerüttelt wird.

5. Verfahren zum Herstellen des Windturbinenblatts (50) nach Anspruch 1,
wobei in dem Schritt zur Bildung einer harzimprägnierten Faserbahn nach dem Imprägnieren der Verstärkungsfaserbahn (3) mit dem nicht ausgehärteten duroplastischen Harz (23) die harzimprägnierte Faserbahn zwischen einem Paar von Walzen (26A, 26B) eingeklemmt wird, um eine Menge des nicht ausgehärteten duroplastischen Harzes, das in der harzimprägnierten Faserbahn (21) enthalten ist, einzustellen.

6. Verfahren zum Herstellen des Windturbinenblatts (50) nach Anspruch 1, ferner umfassend:
einen Rollenbildungsschritt des Wickelns der harzimprägnierten Faserbahn (21) um eine Spule (31), um so wenigstens eine Rolle (30) der harzimprägnierten Faserbahn (21) zu bilden,
wobei in dem Formungsschritt die harzimprägnierten Faserbahnen (21) von der mindestens einen Rolle (30) abgezogen und auf das Formwerkzeug (M) gestapelt werden.

7. Verfahren zum Herstellen des Windturbinenblatts (50) nach Anspruch 6,
wobei in dem Formungsschritt in einem derartigen Zustand, dass ein Ende der harzimprägnierten Faserbahn (21) der mindestens einen Rolle (30) durch eine Klemmvorrichtung (206) gesichert wird, ein Wagen (200), der mit der mindestens einen Rolle (30) angebracht ist, von der Klemmvorrichtung (206) in einer Längsrichtung des Formwerkzeugs (M) wegbewegt wird und die harzimprägnierte Faserbahn (21), die von der mindestens einen Rolle (30) abgezogen wurde, durch mindestens eine Walze (220), die an dem Wagen (200) befestigt ist, auf das Formwerkzeug (M) gedrückt wird.

8. Verfahren zum Herstellen des Windturbinenblatts (50) nach Anspruch 1, ferner umfassend:
einen Rollenbildungsschritt des Wickelns der Verstärkungsfaserbahn um eine Spule (331), um so wenigstens eine Rolle (330) aus der Verstärkungsfaserbahn zu bilden,
wobei in dem Schritt zur Bildung einer harzimprägnierten Faserbahn in einem derartigen Zustand, dass ein Ende der Verstärkungsfaserbahn (3) der mindestens einen Rolle (330) durch eine Klemmvorrichtung (206) gesichert wird, ein Wagen (400), der mit der mindestens einen Rolle (330) aus der Verstärkungsfaserbahn (3) angebracht ist, von der Klemmvorrichtung (206) in einer Längsrichtung des Formwerkzeugs (M) wegbewegt wird, um die Verstärkungsfaserbahn (3) von der mindestens einen Rolle (330) abzuziehen, und die Verstärkungsfaserbahn (3) mit dem nicht ausgehärteten duroplastischen Harz (23) durch eine Imprägniereinheit (420), die in dem Wagen (400) vorgesehen ist, imprägniert wird, um die harzimprägnierte Faserbahn zu bilden,
wobei in dem Formungsschritt die harzimprägnierte Faserbahn, die von der Imprägniereinheit (420) überführt wird, durch mindestens eine Walze (220), die an dem Wagen (400) befestigt ist, auf das Formwerkzeug (M) gedrückt wird.

9. Verfahren zum Herstellen des Windturbinenblatts (50) nach Anspruch 1,
wobei in dem Schritt zur Bildung einer harzimprägnierten Faserbahn das duroplastische Harz (23) zu einem inneren Raum (344) eines Kerns (340) einer Spule (331) injiziert wird, um welche die Verstärkungsfaserbahn (3), die aus den Verstärkungsfasern gebildet ist, gewickelt wird, um eine Rolle (330) aus der Verstärkungsfaserbahn zu bilden, und die Verstärkungsfaserbahn mit dem duroplastischen Harz (23) imprägniert wird, nachdem es durch eine Öffnung (342) getreten ist, die in dem Kern (340) der Spule (331) ausgebildet ist.

10. Verfahren zum Herstellen des Windturbinenblatts (50) nach Anspruch 1,
wobei in dem Formungsschritt die harzimprägnierte Faserbahn (21) auf dem Formwerkzeug (M) zwischen einem Paar von Kerngliedern (64) des Windturbinenblatts (50) angeordnet wird, die in einer Längsrichtung des Formwerkzeugs angeordnet werden, und das duroplastische Harz (23) der harzimprägnierten Faserbahn (21) auf dem Formwerkzeug (M) thermisch ausgehärtet wird, um zwischen dem Paar von Kerngliedern (64) einen Holmgurt (66) des Windturbinenblatts (50) zu formen.

11. Verfahren zum Herstellen des Windturbinenblatts (50) nach Anspruch 1,
wobei der faserverstärkte Kunststoff CFK ist, der Kohlenstofffasern als Verstärkungsfasern umfasst.

## Revendications

1. Procédé de fabrication d'une pale d'éolienne (50) qui est au moins partiellement formée en matière plastique renforcée de fibre, le procédé comportant :
une étape d'étirage de fibre dans laquelle on étire une pluralité de faisceaux de fibres (2) composés chacun de fibre de renfort provenant d'une pluralité de bobines (1), respectivement ;
une étape de formation de feuille de fibre de renfort dans laquelle on dispose la pluralité de faisceaux de fibres (2) tirés des bobines (1) l'un à côté de l'autre et on ouvre la pluralité de faisceaux de fibres (2) de façon à ce que deux faisceaux adjacents des faisceaux de fibres (2) se chevauchent et on forme une feuille de fibre de renfort (3) à partir de la pluralité de faisceaux de fibres (2) ;
une étape de formation de feuille de fibre imprégnée de résine dans laquelle on imprègne la feuille de fibre de renfort (3) avec une résine thermodurcissable (23) qui est sans solvant et sous une forme liquide de façon à former une feuille de fibre imprégnée de résine (21) comprenant la fibre de renfort et la résine thermodurcissable non polymérisée ; et
une étape de moulage dans laquelle on dispose sur un moule (M) la feuille de fibre imprégnée de résine (21) dans un état tel que la résine thermodurcissable (23) est non polymérisée et dans laquelle on polymérise ensuite thermiquement la résine thermodurcissable (23) de la feuille de fibre imprégnée de résine (21) sur le moule (M) de façon à former la pale d'éolienne (50),
le procédé étant **caractérisé en ce que**, dans l'étape de formation de feuille de fibre de renfort, la pluralité de faisceaux de fibres (2) transférés de manière continue est ouverte entre une partie de pincement en amont (6) et une partie de pincement en aval (8) comprenant chacune une paire de rouleaux (6A, 6B, 8A, 8B) dans un état tel que la pluralité de faisceaux de fibres (2) est pincée entre la paire de rouleaux (6A, 6B, 8A, 8B) de chacune de la partie de pincement en amont (6) et de la partie de pincement en aval (8),
dans lequel la paire de rouleaux (6A, 6B) de la partie de pincement en amont (6) tourne à la même vitesse circonférentielle que la paire de rouleaux (8A, 8B) de la partie de pincement en aval (8), et
dans lequel, dans l'étape de formation de feuille de fibre de renfort, du gaz comprimé est pulvérisé par en dessous par au moins une buse (12) disposée en dessous des faisceaux de fibres (2) entre la partie de pincement en amont (6) et la partie de pincement en aval (8) de façon à faire face à la pluralité de faisceaux de fibres (2) disposé l'un à côté de l'autre, et la pluralité de faisceaux de fibres (2) est ouverte par le gaz comprimé,
dans lequel une unité de refoulement de gaz comprimé (10) est prévue entre la partie de pincement en amont (6) et la partie de pincement en aval (8), l'unité (10) étant formée par une partie mobile (14) ayant la au moins une buse (12) et une partie fixe (16) disposée pour être opposée à la partie mobile (14).

2. Procédé de fabrication de la pale d'éolienne (50) selon la revendication 1, dans lequel, dans l'étape de formation de feuille de fibre de renfort, les faisceaux de fibres (2) sont ouverts par du gaz comprimé refoulé par au moins une buse (12) tout en déplaçant la au moins une buse (12) dans un mouvement de va-et-vient dans une direction de largeur de la feuille de fibre de renfort (3), la au moins une buse (12) étant placée entre la partie de pincement en amont (6) et la partie de pincement en aval (8) pour être opposée à la pluralité de faisceaux de fibres (2).

3. Procédé de fabrication de la pale d'éolienne (50) selon la revendication 1, dans lequel, dans l'étape de formation de feuille de fibre de renfort, au moins un des rouleaux (8A, 8B) de la partie de pincement en aval (8) est amené à vibrer de façon à ouvrir les faisceaux de fibres (2).

4. Procédé de fabrication de la pale d'éolienne (50) selon la revendication 3, dans lequel, dans l'étape de formation de feuille de fibre de renfort, au moins un des rouleaux (8A, 8B) est amené à vibrer dans une direction de largeur de la feuille de fibre de renfort (3).

5. Procédé de fabrication de la pale d'éolienne (50) selon la revendication 1, dans lequel, dans l'étape de formation de feuille de fibre imprégnée de résine, après imprégnation de la feuille de fibre de renfort (3) avec de la résine thermodurcissable non polymérisée (23), la feuille de fibre imprégnée de résine est pincée entre une paire de rouleaux (26A, 26B) pour ajuster une quantité de la résine thermodurcissable non polymérisée contenue dans la feuille de fibre imprégnée de résine (21).

6. Procédé de fabrication de la pale d'éolienne (50) selon la revendication 1, comportant en outre :
une étape de formation de rouleau dans laquelle on enroule la feuille de fibre imprégnée de résine (21) autour d'une bobine (31) de façon à former au moins un rouleau (30) de la feuille de fibre imprégnée de résine (21),
dans lequel, dans l'étape de moulage, les feuilles de fibre imprégnées de résine (21) sont tirées depuis le au moins un rouleau (30) et empilées sur le moule (M).

7. Procédé de fabrication de la pale d'éolienne (50) selon la revendication 6, dans lequel, dans l'étape de moulage, dans un état tel qu'une extrémité de la feuille de fibre imprégnée de résine (21) du au moins un rouleau (30) est fixée par une bride (206), un chariot (200) installé avec le au moins un rouleau (30) est déplacé à l'écart de la bride (206) dans une direction longitudinale du moule (M) et la feuille de fibre imprégnée de résine (21) qui a été tirée du au moins un rouleau (30) est pressée sur le moule (M) par au moins un rouleau (220) fixé sur le chariot (200).

8. Procédé de fabrication de la pale d'éolienne (50) selon la revendication 1, comportant en outre :
une étape de formation de rouleau dans laquelle on enroule la feuille de fibre de renfort autour d'une bobine (331) de façon à former au moins un rouleau (330) de la feuille de fibre de renfort,
dans lequel, dans l'étape de formation de feuille de fibre imprégnée de résine, dans un état tel qu'une extrémité de la feuille de fibre de renfort (3) du au moins un rouleau (330) est fixée par une bride (206), un chariot (400) installé avec le au moins un rouleau (330) de la feuille de fibre de renfort (3) est déplacé à l'écart de la bride (206) dans une direction longitudinale du moule (M) pour tirer la feuille de fibre de renfort (3) du au moins un rouleau (330), et la feuille de fibre de renfort (3) est imprégnée avec de la résine thermodurcissable non polymérisée (23) par une unité d'imprégnation (420) prévue dans le chariot (400) de façon à former la feuille de fibre imprégnée de résine,
dans lequel, dans l'étape de moulage, la feuille de fibre imprégnée de résine transférée depuis l'unité d'imprégnation (420) est pressée sur le moule (M) par au moins un rouleau (220) fixé sur le chariot (400).

9. Procédé de fabrication de la pale d'éolienne (50) selon la revendication 1, dans lequel, dans l'étape de formation de feuille de fibre imprégnée de résine, la résine thermodurcissable (23) est injectée vers un espace intérieur (344) d'un mandrin (340) d'une bobine (331) autour duquel la feuille de fibre de renfort (3) composée de fibre de renfort est enroulée pour former un rouleau (330) de la feuille de fibre de renfort, et la feuille de fibre de renfort est imprégnée avec de la résine thermodurcissable (23) qui est passée à travers une ouverture (342) formée dans le mandrin (340) de la bobine (331).

10. Procédé de fabrication de la pale d'éolienne (50) selon la revendication 1, dans lequel, dans l'étape de moulage, la feuille de fibre imprégnée de résine (21) est disposée sur le moule (M) entre une paire d'éléments principaux (64) de la pale d'éolienne (50) disposée dans une direction longitudinale du moule, et la résine thermodurcissable (23) de la feuille de fibre imprégnée de résine (21) est polymérisée thermiquement sur le moule (M) de façon à former une semelle de longeron (66) de la pale d'éolienne (50) entre la paire d'éléments principaux (64).

11. Procédé de fabrication de la pale d'éolienne (50) selon la revendication 1, selon lequel la matière plastique renforcée de fibre est une matière plastique renforcée de fibre de carbone comprenant la fibre de carbone comme fibre de renfort.
